Europäisches Patentamt

European Patent Office

Office européen des brevets

(11) Numéro de publication: **0 363 292**
**A1**

## (12) DEMANDE DE BREVET EUROPEEN

(21) Numéro de dépôt: 89440093.6

(22) Date de dépôt: 12.09.89

(51) Int. Cl.5: **A01K 1/01 , B65D 5/64**

(30) Priorité: 15.09.88 FR 8812406
15.09.88 FR 8812407

(43) Date de publication de la demande:
**11.04.90 Bulletin 90/15**

(34) Etats contractants désignés:
**AT BE CH DE ES FR GB GR IT LI LU NL SE**

(71) Demandeur: **Poulain, Francis**
**89 rue Jeanne d'Arc**
**F-80000 Amiens (Somme)(FR)**

(72) Inventeur: **Caudron, Marcelle née Garbe**
**89 rue Jeanne d'Arc**
**F-80000 Amiens (Somme)(FR)**

(74) Mandataire: **Lepage, Jean-Pierre**
**Cabinet Lepage & Aubertin Innovations et**
**Prestations 23/25, rue Nicolas Leblanc B.P.**
**1069**
**F-59011 Lille Cédex 1 (Nord)(FR)**

(54) **Conditionnement pour un bac ou plusieurs bacs emboités chargés partiellement de produits granulaires ou pulvérulents.**

(57) L'invention est relative à un conditionnement d'un bac ou de bacs empilés remplis partiellement de produits granulaires ou pulvérulents qui trouvera par exemple son application pour la commercialisation d'ensembles hygiéniques pour animaux ou pour former un kit complet de préparation d'une composition telle que ciment, plâtre ou autre.

Les bacs (2), en matériau souple, dont les parois sont faiblement évasées, permettent leur emboitement. Le conditionnement présente des moyens presseurs (5) qui assurent le confinement du matériau granulaire dans le bac et/ou entre les bacs emboités et dans le fond du bac supérieur (2) afin d'éviter toute déperdition. Ces moyens presseurs se présentent par exemple sous la forme d'un plateau supérieur (5) et d'une ceinture (12) qui s'applique sur le dit plateau (5).

FIG.9

L'invention est relative à un mode de conditionnement d'un bac ou plusieurs bacs emboîtés les uns dans les autres, destinés à recevoir partiellement des produits granulaires ou pulvérulents. Elle trouvera par exemple son application pour la commercialisation de produits alimentaires vendus en barquettes, de litières jetables pour chats, ou encore pour former notamment un kit complet de préparation d'une composition telle que ciment, plâtre ou autre.

Une des applications typiques de la présente invention concerne ce que l'on appelle communément un "ensemble hygiénique pour chats", c'est-à-dire un ensemble composé à partir d'au moins un bac souple en matière plastique, de dimension relativement importante, rempli partiellement d'une certaine quantité de produits granulaires absorbants. Une seconde application est la commercialisation de produits vendus conjointement avec le récipient dans lequel ils seront utilisés. A titre d'exemple, il peut s'agir de plâtre vendu dans sa gache, de terreau vendu dans une jardinière ou autre.

Actuellement, le public est à la recherche de produits à la fois commodes d'utilisation et économiques. C'est ainsi que c'est développée toute une gamme d'articles consommables destinés à être jetés après emploi. Les matériaux tels que les matières plastiques et les cartons ont fortement contribué au développement de ces produits créés pour faciliter la vie de l'utilisateur.

Précisément, dans le domaine de l'hygiène pour chat, s'est développé chez le consommateur le désir d'avoir à sa disposition un ensemble prêt à l'emploi d'une part et jetable après utilisation d'autre part. C'est-à-dire un ensemble hygiénique composé d'au moins un bac en matière souple contenant une certaine quantité de produit granulaire absorbant utilisé pour l'hygiène des chats, cet ensemble étant destiné a être jeté après emploi.

La présente invention permet la commercialisation, le transport ainsi que l'utilisation par le consommateur dans les meilleurs conditions d'un tel ensemble.

Non seulement des solutions techniques doivent être apportées pour résoudre le problème posé mais également l'aspect économique constitue un facteur déterminant pour la réussite commerciale du produit.

Actuellement, l'utilisation de litières pour chats demande aux consommateurs un certain nombre d'opérations contraignantes et peu agréables. Pour des raisons évidentes d'hygiène et d'odeur, la litière doit être changée régulièrement c'est pourquoi l'utilisateur doit disposer tout d'abord d'un récipient, plus souvent un bac en matière plastique.

Il lui faut ensuite déverser dans ce récipient une certaine quantité de produit granulaire absorbant. Ce produit étant vendu en vrac, il s'en suit toujours une utilisation mal aisée: soit trop de produit, soit pas assez, poussière dégagée lors du déversement, etc.... Cette manipulation est d'ailleurs souvent réalisée dans des pièces sensibles, par exemple en cuisine.

Le plus délicat vient ensuite lors de l'enlèvement des excréments et du changement de la litière proprement dite. Le consommateur doit alors vider le contenu du récipient et nettoyer ensuite ce récipient car celui-ci est durable et doit être réemployé.

Il faut donc reconnaitre que ce travail d'entretien de la litière pour chats n'est pas particulièrement agréable et qu'il est contraignant pour l'utilisateur compte tenu du nombre important de manipulations à effectuer. Actuellement, une des solutions connues consiste à proposer un bac réalisé en matériau plastique souple rempli partiellement de produits absorbants et fermé par un opercule. Au moment de son utilisation, il est nécessaire de découper l'opercule de façon à rendre la litière proprement dite accessible à l'animal. Après l'utilisation, on jette le bac et son contenu.

Sur le plan technique, cette solution convient, bien qu'elle ne soit pas tout à fait commode. En effet, l'utilisateur doit découper l'opercule au moyen d'un objet coupant qui risque de percer le bac lors de la manoeuvre. D'autre part, l'operculage de bac est une opération délicate qui nécessite un certain laps de temps et il s'en suit un surcoût de fabrication non négligeable.

Parmi les applications dans le domaine du bricolage, l'invention a été élaborée dans le but d'offrir à la clientèle un ensemble pratique et économique complet. Le consommateur retrouvera dans le conditionnement l'ensemble des éléments indispensables à une tâche.

Pour prendre l'exemple du plâtre, aujourd'hui le bricoleur qui veut exécuter un petit travail doit acquérir du plâtre conditionné en sachets ou en boites cartonnées et doit également disposer d'un bac dans lequel il mélangera le plâtre et l'eau. Une fois, le travail exécuté, il devra nettoyer le bac et le ranger.

Pour une action ponctuelle, l'achat d'un bac traditionnel ne se justifie pas toujours. Toutefois, les conditionnements actuels ne permettent pas de commercialiser le plâtre dans un récipient économique qui servirait à la préparation du mélange.

Le but principal de la présente invention est de présenter un conditionnement pour un ou plusieurs récipients empilés, remplis partiellement de matières granulaires ou pulvérulents qui soit économique pour s'adapter à tout type de matière et inviolable pour garantir le contenu vis-à-vis des consommateurs.

L'aspect économique du conditionnement est obtenu grâce à l'emploi de matériau traditionnel tel que le carton travaillé sur des outillages de découpe courante. De plus, il s'agit d'un matériau facilement imprimable et qui donc consiste un excellent support publicitaire.

L'inviolabilité du conditionnement peut être obtenue en obligeant l'utilisateur à déchirer le conditionnement pour accéder au contenu du récipient. De la sorte, la présence d'un conditionnement intact garantit le consommateur de l'intégrité du contenu.

Un autre but de la présente invention est de présenter un conditionnement qui offre une bonne sécurité d'utilisation, en particulier, il évite les déperditions accidentelles de contenu.

D'autres buts et avantages de la présente invention apparaitront au cours de la description suivante donnée à titre indicatif.

Selon l'invention, le conditionnement pour un bac ou plusieurs bacs emboités chargés partiellement de produits granulaires ou pulvérulents, qui trouvera par exemple son application pour la commercialisation d'ensembles hygiéniques pour animaux ou pour former un kit complet de préparation d'un composition telle que ciment, plâtre ou autre, est caractérisé par le fait qu'il comprend des moyens presseurs qui assurent le confinement du produit dans le bac, et/ou entre les bacs emboités et dans le fond du bac supérieur de la pile, chacun des bacs emboités le cas échéant ayant le fond qui repose sur le lit de produits granulaires du bac inférieur.

L'invention sera mieux comprise à la lecture de la description suivante accompagnée de dessins en annexe parmi lesquels:

- la figure 1 schématise un bac rempli partiellement d'un produit granulaire ou pulvérulent,

- la figure 2 montre un empilage de bacs,

- la figure 3 représente en vue de coupe une série de bacs emboités remplis chacun partiellement de produits granulaires ou pulvérulents,

- la figure 4 représente un plateau presseur,

- la figure 5 illustre un premier mode de conditionnement d'un ensemble de bacs emboités regroupés dans une enveloppe rigide,

- la figure 6 schématise l'utilisation d'une ceinture pour assurer l'application du plateau presseur sur le produit granulaire ou pulvérulent,

- la figure 7 montre en vue de coupe le conditionnement complet appliqué à un bac regroupant différents produits,

- la figure 8 montre la constitution des moyens d'appui sur l'enveloppe pour s'appliquer sur le plateau presseur,

- la figure 9 représente un autre mode de réalisation du conditionnement selon la présente invention appliqué à une pile de bacs,

- la figure 10 représente le plateau presseur intégré à la ceinture du conditionnement,

- la figure 11 schématise en vue de coupe la mise en place du plateau presseur sur les produits pulvérulents ou granulaires contenus dans le bac,

- la figure 12 représente le profil de découpe pour l'ensemble ceinture et plateau presseur de la figure 9.

La présente invention vise un conditionnement d'un bac ou de plusieurs bacs emboités chargés, partiellement de produits granulaires ou pulvérulents. Elle trouve de nombreuses applications qui se distinguent selon que l'on recherche la commercialisation d'un ensemble de bacs comme par exemple dans le cas de litières jetables pour animaux, ou d'un bac unique tel que par exemple pour former un kit complet de préparation d'une composition notramment ciment, plâtre ou autre.

La présente invention a été développée pour répondre au goût des consommateurs qui s'orientent de plus en plus vers des produits à usage unique, pratique et économique.

Pour suivre l'exemple des litières jetables à usage unique, chaque bac pour être économique doit être réalisé en matière plastique souple de faible épaisseur, rempli partiellement de granulés absorbants. Le problème se situe au niveau du maintien des dits granulés dans le bac, ceux-ci ne devant pas bien entendu pouvoir s'échapper quels que soient le mode et le sens de transport utilisés.

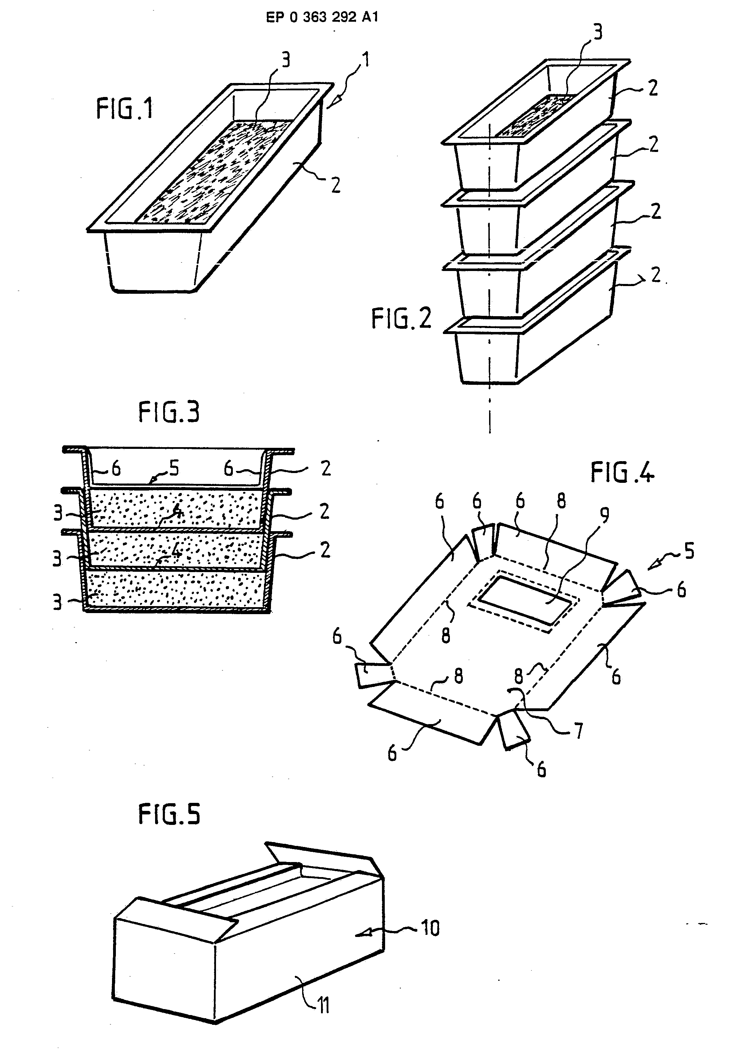

La figure 1 illustre un élément de l'ensemble a commercialiser, dans l'exemple choisi, il s'agit d'un ensemble hygiénique 1 composé au moins d'un bac 2 rempli partiellement de produits granulaires ou pulvérulents 3.

L'élément étant destiné à être jeté après usage, doit par conséquent faire l'objet d'une fabrication économique en ce sens que l'épaisseur du bac doit être faible pour dénuer le coût de la matière première et que d'autre part les techniques de remplissage doivent être les plus simples possibles également pour des raisons évidentes d'économie.

En outre, les bacs 2, remplis partiellement de produits 3, sont destinés à être emboités, tels qu'illustrés à la figure 2, pour être commercialisés par lots par exemple. L'emboitement des différents bacs est bien réalisé puisque comme cela a été souligné précédemment, chaque bac conserve un espace intérieur important disponible étant donné son faible taux de remplissage.

La figure 3 illustre en vue de coupe une pile de bacs 2 emboités dont les fonds 4 reposent sur le produit granulaire 3 du bac inférieur. Il est donc nécessaire que ces bacs aient une forme telle qu'une fois emboités et maintenus par des moyens presseurs, tout déversement du produit devient impossible.

Selon une caractéristique de la présente invention, le conditionnement du bac et/ou du groupe de bacs emboîtés comprend des moyens presseurs qui assurent le confinement du produit granulaire 3 ou pulvérulent dans le bac unitaire et/ou entre les bacs 2 et dans le fond 4 du bac supérieur 2 de la pile dans le cas de bacs empilés.

Ces moyens presseurs se présentent sous la forme d'un plateau 5 à rebord 6 dont le profil épouse le mieux possible le volume et la forme intérieure du bac 2, par exemple supérieur dans le cas de la pile, garni de produit pour s'appliquer sur toute la surface du produit granulaire 3 ainsi que contre les parois du dit bac supérieur, comme cela est illustré à la figure 3.

La figure 4 représente un mode de réalisation du plateau presseur 5. Il est constitué d'une base 7 qui fait office de surface d'appui pour les produits granulaires ou pulvérulents 3 et dont la forme géométrique correspond à celle du bac 2. Autour de cette base 7, sont disposés des rebords articulés 6 qui sont destinés à s'appliquer contre les parois du bac supérieur 2.

Les rebords 6 sont articulés par l'intermédiaire d'une arête de pliage 8 disposée à la périphérie de la base 7. Cette structure permet en toute circonstance au rebord 6 de s'appliquer contre les parois du bac 2 pour obtenir l'étanchéité malgré la souplesse et donc la déformabilité des parois du bac 2.

A des fins commerciales, notamment pour que l'acheteur puisse voir la nature du produit granulaire ou pulvérulent, on pourra par exemple découper une fenêtre 9 dans le plateau presseur. Bien entendu, un film en matériau transparent sera appliqué au niveau de la fenêtre 9 pour en garantir l'étanchéité.

Par ailleurs, des dispositions techniques doivent également être prises pour maintenir l'étanchéité entre les bacs 2 de la pile. Tout d'abord, on utilisera de préférence des bacs 2 dont les parois sont faiblement évasées. En effet, cette forme est favorable à l'étanchéité dans la mesure ou les parois des bacs emboîtés deviennent jointives au-dessus du niveau souhaité du produit se trouvant contenu dans les bacs.

En outre, pour obtenir une bonne application du plateau presseur 5 à la surface du produit granulaire 3, les rebords 6 du dit plateau 5 présenteront une hauteur sensiblement égale à la hauteur laissée libre, après remplissage du produit, des parois du bac et/ou du bac supérieur de la pile.

Cela étant, le conditionnement de la présente invention comprend des moyens presseurs latéraux dont le rôle est d'appliquer le plateau contre le produit granulaire ou pulvérulent contenu dans le bac sur lequel il agit et de plus de maintenir la cohésion de l'ensemble des bacs empilés le cas échéant.

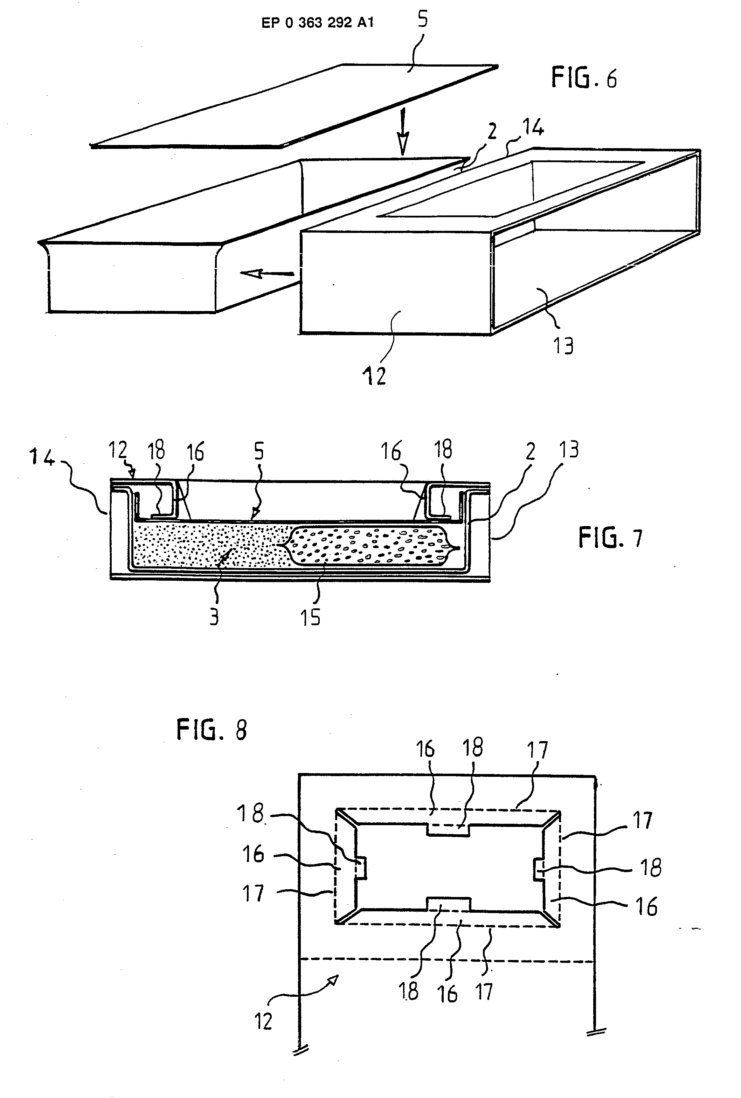

Ces moyens presseurs latéraux peuvent par exemple se présenter sous la forme d'une enveloppe rigide 10 dans laquelle les bacs 2 emboîtés sont enfermés. Un tel exemple est illustré à la figure 5 dans laquelle l'enveloppe rigide 10 se présente sous la forme d'une caisse 11 dont les côtés sont ajustés pour s'appliquer contre les rebords supérieurs des bacs 2 de telle sorte qu'ils ne puissent pas se cintrer.

Les fuites sont donc éliminées et, de plus, les bacs emboîtés peuvent facilement être commercialisés sous la forme d'un ensemble compact.

Cependant, la caisse 11, relativement coûteuse pour certaines applications, pourra être remplacée par une ceinture 12 telle qu'illustrée à la figure 6. Après que le plateau presseur 5 ait été disposé à la surface du produit granulaire contenu dans le bac 2, la ceinture fermée 12 est glissée pour venir entourer le bac 2 ou la pile de bacs par le dessus. La ceinture 12 comporte en outre des moyens d'appui fixés sur le plateau 5 pour bloquer l'ensemble.

La ceinture 12 comporte des ouvertures latérales 13 et 14, car dans un souci de simplification, elle est formée d'une bande bouclée sur elle-même. Par souci d'économie, le conditionnement de la présente invention est par exemple réalisé à partir d'un flanc de carton ondulé. On pourrait cependant parfaitement envisager d'utiliser d'autres matériaux tels que des matières plastiques par exemple pour obtenir des propriétés d'étanchéité à l'eau ou à l'air.

La figure 7 représente le conditionnement en vue de coupe. Le plateau presseur 5 repose sur le contenu 3 du bac 2 qui, dans l'exemple choisi, se compose notamment d'une matière granulaire déposée en vrac dans le fond du bac 2 et d'une matière pulvérulente enveloppée d'un sachet 15. Il ne s'agit là que d'un exemple et d'autres dispositions dans le fond du bac 2 pourraient parfaitement être adoptées.

La seule consigne à respecter dans ce cas est de disposer l'ensemble des matières, articles ou autres dans le fond du bac 2 de telle sorte qu'ils définissent un même niveau par rapport au rebord du bac 2, ceci de telle sorte que le plateau 5 appuie sur toute sa surface.

Des moyens d'appui 16, tels qu'illustrés à la figure 7, sont formés par des éléments qui relient la ceinture 12 au plateau presseur 5 de telle sorte que ce dernier s'applique sur le contenu 3. Ils permettent de sceller le conditionnement en verrouillant la ceinture 12 sur le plateau presseur 5.

Différents moyens de fixation peuvent être utilisés à ce niveau par exemple le collage. Les moyens d'appui 16 se présentent sous la forme de rabats découpés dans la partie supérieure de la ceinture 12 et qui repliés, sont fixés sur le plateau presseur 5.

Le collage offre l'avantage d'être définitif et ainsi il n'est pas possible de dégager les moyens d'appui 16 sans rompre la fixation. Toute violation du contenu du conditionnement est visible.

Pour ouvrir le conditionnement, l'utilisateur doit ouvrir la ceinture 12 en la découpant. Il peut ainsi accéder au bac et à son contenu de façon simple et rapide. La découpe de la ceinture 12 pourra d'ailleurs être facilitée en disposant des perforations dans le sens transversal de sorte qu'il constitue une zone privilégiée pour la découpe.

La figure 8 illustre le découpage particulier de la partie supérieure de la ceinture 12 correspondant au-dessus du bac 2. Le flanc cartonné qui sert à la confection de la ceinture 12 est marqué par des arêtes de pliage 17 qui servent au repliage des rabats 16. Ces derniers présentent des bords latéraux biseautés jointifs. A l'extrémité des rabats 16 se trouvent des pattes de fixation 18 où seront localisés les points de collage de la ceinture 12 au plateau presseur 5.

Dans les réalisations proposées jusqu'à présent, le conditionnement est toujours formé en deux parties, un plateau presseur 5 et une ceinture de liaison et d'appui 12. Il est toutefois possible d'intégrer le plateau presseur 5 à la ceinture 12 pour diminuer sensiblement les coûts de fabrication et de pose sans pour autant nuire à la qualité de l'article fini.

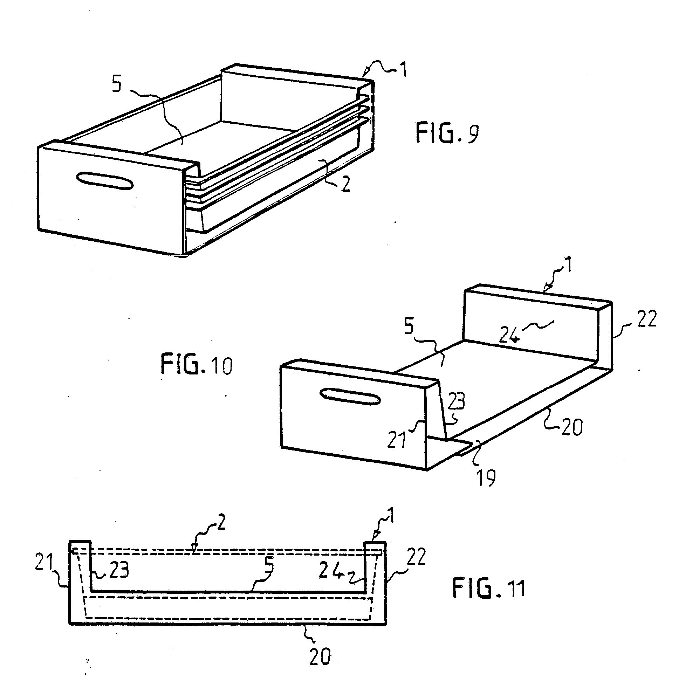

Selon cet autre mode de réalisation, tel qu'illustré à la figure 9, le conditionnement 1 dispose de moyens presseurs qui se présentent sous la forme d'une bande fermée disposée autour du ou des différents bacs 2 et qui comportent un pliage 5 intérieur destiné à s'appliquer à plat contre le contenu du bac considéré.

La figure 10 illustre le conditionnement 1 seul sans bac 2. Celui-ci est constitué d'une bande formée de parois semi-rigides reliées entre elles par des arêtes de pliage bouclées par une fixation 19. L'emploi d'un matériau semi-rigide est nécessaire pour éviter tout pliage intempestif qui libèrerait le contenu du bac supérieur 2. En particulier, il est nécessaire d'utiliser un matériau semi-rigide pour éviter que le plateau presseur 5 ne puisse plier et se déboiter de l'intérieur du bac 2.

Par ailleurs, la bande doit être à l'origine ouverte pour pouvoir être disposée autour des bacs empilés, une fois la mise en place effectuée, il y a lieu de fermer la bande par une fixation 19. Les matériaux préconisés pour la fabrication de la bande sont notamment une matière plastifiée de type polypropylène ou encore un carton ondulé, ce dernier présentant l'avantage de facilement être imprimable, découpable et collable à bas prix.

La bande comporte un fond 20, des bords latéraux 21 et 22 destinés à envelopper le ou les bacs 2, ainsi que des rebords intérieurs 23 et 24 et un plateau presseur 5 destiné à s'appliquer contre le matériau granulaire ou pulvérulent garnissant le bac, et notamment le bac supérieur 2 dans le cas de bacs empilés.

La figure 11 montre la mise en place du conditionnement 1 autour d'un bac 2, représenté en pointillés. Une fois la bande bouclée, le bac 2 est prisonnier du conditionnement et seul un découpage de la bande permet de libérer le bac et son contenu. A cet égard, il est possible d'améliorer le blocage et/ou l'étanchéité du plateau presseur 5 en faisant en sorte que les rebords intérieurs 23 et 24 soient légèrement divergents pour suivre par exemple l'évasement des parois du bac. En effet, dans ce cas, les rebords intérieurs 23 et 24 non seulement assurent l'application du plateau 5 contre le contenu du bac 2 mais par ailleurs favorisent sa tension à plat.

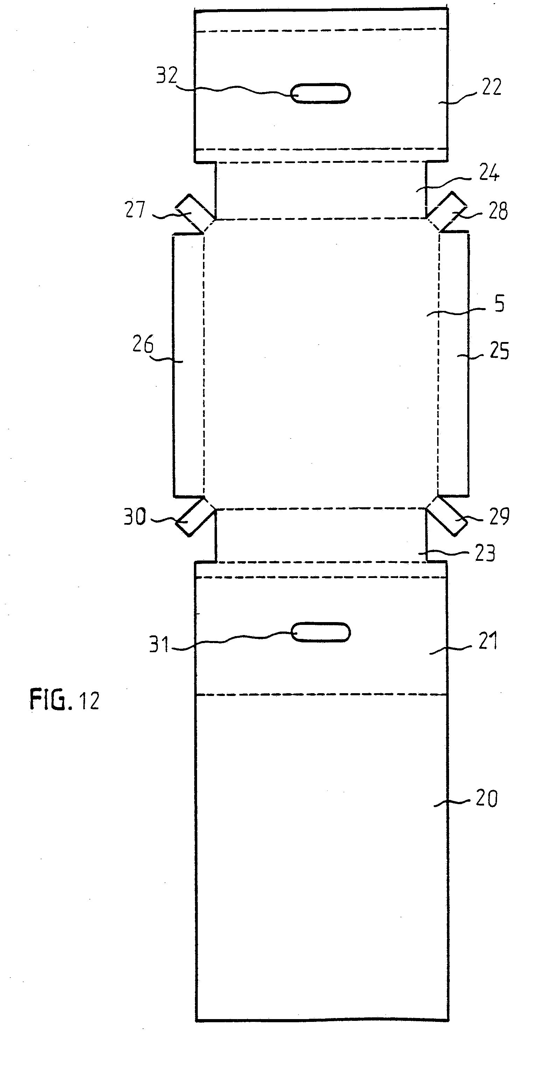

La figure 12 schématise un plan de découpe selon le mode de réalisation du conditionnement 1 exposé ci-dessus.

Selon ce plan de découpe de la bande, le plateau presseur 5 comporte en outre des rebords latéraux 25 et 26 destinés à s'appliquer contre les parois du bac supérieur 2. Ceci permet d'une part d'accroître l'étanchéité pour éviter toute fuite de matière granulaire et d'autre part il y a un renforcement de la rigidité longitudinale du plateau presseur 5.

Au cas où le bac 2 présenterait des coins légèrement arrondis ou biseautés, il serait avantageux de disposer dans les angles du plateau presseur 5 des languettes obliques 27, 28, 29 et 30 comme le montre la figure 12 dont le rôle est d'assurer l'étanchéité à ce niveau.

Pour faciliter la préhension du conditionnement 1, on pourra placer au niveau des rebords latéraux 21 et 22 des découpes 31 et 32 qui formeront des poignées.

Au cas où la vision des produits présenterait un intérêt, il est également possible de découper au niveau du plateau presseur 5 une fenête, auquel cas l'étanchéité devrait être assurée par la mise en place d'un film transparent à ce niveau.

## Revendications

1. Conditionnement pour un bac ou plusieurs bacs emboités chargés partiellement de produits granulaires ou pulvérulents, qui trouvera par exemple son application pour la commercialisation d'ensembles hygiéniques pour animaux ou pour former un kit complet de préparation d'une composition telle que ciment, plâtre ou autre, caractérisé par le fait qu'il comprend des moyens presseurs (5) qui assurent le confinement du produit (3) dans le bac, et/ou entre les bacs (2) emboités et dans le fond du bac supérieur de la pile, chacun des bacs (2) emboités le cas échéant ayant le fond (4) qui repose sur le lit de produit (5) garnissant le bac (2) inférieur.

2. Conditionnement pour un ou plusieurs bacs emboités selon la revendication 1, caractérisé par le fait que les moyens presseurs se présentent sous la forme d un plateau (5) dont le profil épouse le volume intérieur du bac (2) garni pour s'appliquer sur la surface du produit (3).

3. Conditionnement pour un ou plusieurs bacs emboités selon la revendication 2, caractérisé par le fait que le plateau presseur (5) présente des rebords articulés (6).

4. Conditionnement pour un ou plusieurs bacs emboités selon la revendication 3, caractérisé par le fait que la hauteur des rebords (6) du plateau (5) presseur correspond à la hauteur libre des parois du bac (2) et/ou du bac supérieur de la pile, une fois le remplissage effectué.

5. Conditionnement pour un ou plusieurs bacs emboités selon la revendication 1, caractérisé par le fait que les moyens presseurs latéraux se présentent sous la forme d'une enveloppe rigide (10) dans laquelle le bac et/ou la pile de bacs (2) est enfermé.

6. Conditionnement pour un ou plusieurs bacs emboités selon la revendication 5, caractérisé par le fait que l'enveloppe rigide (10) a une forme de ceinture (12) dans laquelle sont glissés le bac et/ou les bacs empilés (2).

7. Conditionnement pour un ou plusieurs bacs emboités selon la revendication 6, caractérisé par le fait que l'enveloppe (12) présente des moyens d'appui (16) du plateau presseur (5).

8. Conditionnement pour un ou plusieurs bacs emboités selon la revendication 7, caractérisé par le fait que les moyens d'appui se présentent sous la forme de rabats (16) qui s'appliquent sur le plateau presseur (5).

9. Conditionnement pour un ou plusieurs bacs emboités selon la revendication 1, caractérisé par le fait que les moyens presseurs se présentent sous la forme d'une bande fermée disposée autour du ou des bacs (2) empilés qui comportent un pliage intérieur (5) destiné à s'appliquer à plat contre le contenu du bac supérieur (2)

10. Conditionnement pour un ou plusieurs bacs empilés selon la revendication 9, caractérisé par le fait que la bande est formée de parois semi-rigides reliées entre elles par des arêtes de pliage bouclées par une fixation (19).  -

11. Conditionnement pour plusieurs bacs empilés selon la revendicatgion 10, caractérisé par le fait que la bande comporte un fond (20) des bords latéraux (21 et 22) qui enveloppent le ou les bacs (2) ainsi que des rebords intérieurs (23 et 24) et un plateau presseur (5).

12. Conditionnement pour plusieurs bacs empilés selon la revendication 11, caractérisé par le fait que les rebords intérieurs (23 et 24) sont divergents.

13. Conditionnement pour plusieurs bacs empilés selon la revendication 11, caractérisé par le fait que le plateau presseur (5) comporte des rebords latéraux (25 et 26).

14. Conditionnement pour plusieurs bacs empilés selon la revendication 13, caractérisé par le fait que le plateau presseur (5) comporte des languettes obliques (27, 28, 29 et 30).

15. Conditionnement pour plusieurs bacs empilés selon la revendication 11, caractérisé par le fait que les bords latéraux (21 et 22) présentent des découpes (31 et 32) qui constituent des poignées de préhension.

FIG.1

FIG.2

FIG.3

FIG.4

FIG.5

EP 0 363 292 A1

FIG. 6

FIG. 7

FIG. 8

FIG. 9

FIG. 10

FIG. 11

FIG. 12

Office européen
des brevets

# RAPPORT DE RECHERCHE EUROPEENNE

Numero de la demande

EP 89 44 0093

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 593 670 (J.-F. LANTRUA et al.) <br> * revendication 1; figures 4-7 * <br> --- | 1,5 | A 01 K 1/01 <br> B 65 D 5/64 |
| A | CH-A- 416 450 (L. MORITZ) <br> * revendications 1,2; figure 2 * <br> --- | 1,3 | |
| A | US-A-2 944 727 (N.H. MOORE) <br> * revendication 1 * <br> --- | 1,3,7,8 | |
| A | DE-A-3 420 837 (I. BAECKER et al.) <br> * revendications 1-3; figures 1,2 * <br> --- | 1-3,13, 15 | |
| A | US-A-3 146 935 (E.D. CARKHUFF et al.) <br> * revendication 1; figures 1-3 * <br> --- | 1,3 | |
| A | FR-A-2 237 815 (UNILEVER) <br> * revendication 1; figures 1,2 * <br> --- | 1,2,4 | |
| A | GB-A-1 380 921 (DRG PACKAGING) <br> * figures 1-3 * <br> ----- | 6 | |

DOMAINES TECHNIQUES
RECHERCHES (Int. Cl.5)

A 01 K
B 65 D

Le présent rapport a été établi pour toutes les revendications

| Lieu de la recherche | Date d'achèvement de la recherche | Examinateur |
|---|---|---|
| BERLIN | 28-11-1989 | NOVELLI B. |

EPO FORM 1503 03.82 (P0402)